# EUROPEAN PATENT APPLICATION

(11) **EP 4 654 172 A1**
(43) Date of publication of application: **26.11.2025**
(21) Application number: 25176461.9
(22) Date of filing: 14.05.2025
(51) Int. Cl.: G08G 5/51, G08G 5/80

(54) **SYSTEMS AND METHODS FOR SMART COLLISION-AVOIDANCE PROTECTION FOR AIRCRAFT**

(30) Priority: 20.05.2024 US 202463649710 P; 20.05.2024 US 202463649690 P
(71) Applicant: Airbus SAS, 31700 Blagnac Cedex (FR); AIRBUS OPERATIONS (S.A.S.), 31060 Toulouse (FR)
(72) Inventor: LAURENS, Pascal, 31060 TOULOUSE (FR); BIZET, Pierre, 31700 BLAGNAC (FR); RIGAUD, Jonathan, 31700 BLAGNAC (FR); SERVOLES, Sébastien, 31700 BLAGNAC (FR); FAURE, Louise, 31060 TOULOUSE (FR); NICOLAS, Dorothée, 31700 BLAGNAC (FR); BRUNOT, Mathieu, 31060 TOULOUSE (FR)
(74) Representative: Cabinet Le Guen Maillet

(57) **Abstract**

An automated aircraft taxi system for an aircraft taxiing within an airport environment implements a collision-avoidance function (410). The collision-avoidance function (410) triggers revision of guidance instructions and/or alerts the pilots of the aircraft when a predicted trajectory of moving objects intersects a taxi path trajectory of the aircraft. The collision-avoidance function (410) disregards an identified object that is moving on a taxiway in the airport environment when a predicted trajectory of the identified object does not intersect the taxi path trajectory of the aircraft according to the location of the identified object and the layout of taxiways on the airport map.

## Description

### TECHNICAL FIELD

The disclosure herein relates to a system for automated taxi operations of an aircraft within an airport environment. In particular, the disclosure herein relates to a system for collision avoidance between the aircraft taxiing on the taxiway and moving objects detected within the airport environment.

### RELATED ART

After all of the passengers have boarded a flight and the aircraft is prepared for takeoff, the aircraft begins a taxi phase within the airport environment from a departure gate to a designated take-off runway. Similarly, after an aircraft has landed and has exited a landing runway, a taxi phase also occurs within the airport environment to bring the aircraft to an arrival gate. During the taxi phase, the aircraft travels along taxiways from the gate in question to the runway in question or vice versa. Some airports are large and may have complicated taxiways. In some cases, the taxiways may include obstacles and/or hazards that the taxiing aircraft shall avoid. Moreover, the airport environment may include moving objects, such as other aircrafts taxiing or airport vehicles in operation. Aircraft pilots need to monitor the obstacles and hazards present, and importantly the moving objects, to avoid risks of collisions. This increases pilots' workload when they could have many procedures to perform at the same time.

Therefore, there exists room for improvement of automated operation during the taxi phase to reduce the pilot's workload, taking into account that spurious triggering of alters and uncomfortable automated actions shall be avoided.

### SUMMARY OF THE INVENTION

It is proposed herein a method performed by an automated aircraft taxi system for an aircraft taxiing within an airport environment, which comprises:
- obtaining an airport map and representing in real-time a current location of the aircraft on the airport map;
- obtaining a taxi path trajectory of the aircraft to a destination within the airport environment;
- computing guidance instructions based on the taxi path trajectory, so that the guidance instructions enable automatically guiding the aircraft within the airport environment according to the taxi path trajectory until reaching the destination; and
- activating an aircraft protection including a collision-avoidance function that triggers revision of the guidance instructions and/or alerts the pilots of the aircraft when the predicted trajectory of moving objects intersects the taxi path trajectory,

The method further comprises:
- detecting moving objects within the airport environment; and
- identifying a location of the moving objects on the airport map.

And the collision-avoidance function disregards an identified object that is moving on a taxiway in the airport environment when a predicted trajectory of the identified object does not intersect the taxi path trajectory according to the location of the identified object and the layout of taxiways on the airport map.

Thus, thanks to the automated aircraft taxi system as configured above, the automated operation during the taxi phase reduces the pilot's workload and spurious triggering of alerts to the pilot and/or uncomfortable actions, such as unnecessary auto-braking, are avoided.

According to a particular embodiment, the collision-avoidance function further triggers revision of the guidance instructions when the taxi path trajectory of the aircraft passes through a detected object or hazard, which includes calculating, based on the location and trajectory of the object or hazard and the current location and the taxi path trajectory of the aircraft, a revised taxi path trajectory to avoid the detected object or hazard. And the method further includes modifying the guidance instructions to thereby alter the taxi path trajectory of the aircraft to the revised trajectory.

According to a particular embodiment, the airport map identifies locations of objects or hazards already known within the airport environment, and the generated taxi path trajectory avoids collision of the aircraft with the objects or hazards already present on the airport map when obtained by the automated aircraft taxi system.

According to a particular embodiment, the airport map is provided by an equipment of an airport entity, such as Air Traffic Control equipment or Operations Control Center equipment.

According to a particular embodiment, the Air Traffic Control equipment provides information about taxi clearances and/or the OCC equipment map provides information about flight dispatch to ease object detection within the airport environment.

According to a particular embodiment, the automated aircraft taxi system detects hazards and objects within the airport environment by:
- determining the current location of the aircraft on the airport map and its direction; and
- based on measurements from surveillance data provided by surveillance aircraft sensors, determining distance and direction of the hazards and objects from the current location of the aircraft.

And the method further comprises determining on the airport map where the hazards and objects should be indicated based on the distance and direction of said hazards and objects with respect to the current location of the aircraft.

According to a particular embodiment, the method further comprises:
- detecting border lines of the taxiway ahead of the aircraft using aircraft surveillance sensors; and
- adjusting the guidance instructions to protect the aircraft from taxiway excursions:

According to a particular embodiment, the method further comprises:
- correlating taxiways border lines on the airport map with border lines of the taxiway ahead of the aircraft as captured by the aircraft surveillance sensors;
- . making prediction of the taxiway border lines position in the future as the aircraft is moving; and
- reducing a field of view of the aircraft surveillance sensors capturing the taxiway border lines ahead of the aircraft according to the prediction.

According to a particular embodiment, the method further comprises receiving dual inputs to override the guidance instructions,
either by both pilots of the aircraft,
or by one pilot and an ATC controller,
or by one pilot and an OCC dispatcher,
and the automated taxi system provides a human-machine interface including an action interface with which the pilots can interact and which has ability to receive instructions from the pilots of the aircraft to request that the protection order be overridden, and the automated taxi system has the ability to receive digital messages from Air Traffic Control equipment and/or Operations Control Center equipment which provide confirmation that the guidance instructions can be overridden.

It is further proposed herein a computer program product comprising executable instructions, which when executed by a processing circuit of a computing device causes the computing device to execute the method above according to any one of its embodiments. It is further proposed herein a non-transitory computer-readable storage medium having executable instructions stored thereon, which when read from the non-transitory computer-readable storage medium and executed by a processing circuit of a computing device causes the computing device to execute the method above according to any one of its embodiments.

It is further proposed herein an automated aircraft taxi system for an aircraft taxiing within an airport environment, which comprises electronic circuitry configured to implement:
- obtaining an airport map and representing in real-time a current location of the aircraft on the airport map;
- obtaining a taxi path trajectory of the aircraft to a destination within the airport environment;
- computing guidance instructions based on the taxi path trajectory, so that the guidance instructions enable automatically guiding the aircraft within the airport environment according to the taxi path trajectory until reaching the destination; and
- activating an aircraft protection including a collision-avoidance function that triggers revision of the guidance instructions and/or alerts the pilots of the aircraft when the predicted trajectory of moving objects intersects the taxi path trajectory of the aircraft,

And the electronic circuitry is configured to further implement:
- detecting moving objects within the airport environment; and
- identifying a location of the moving objects on the airport map.

The electronic circuitry is further configured such that the collision-avoidance function disregards an identified object that is moving on a taxiway in the airport environment when a predicted trajectory of the identified object does not intersect the taxi path trajectory of the aircraft according to the location of the identified object and the layout of taxiways on the airport map.

It is also proposed herein an aircraft including such an automated aircraft taxi system.

### BRIEF DESCRIPTION OF THE DRAWINGS

The characteristics of the invention will emerge more clearly from a reading of the following description of at least one example of embodiment, said description being produced with reference to the accompanying drawings, among which:
- Fig. 1 schematically represents a top view of an aircraft;
- Fig. 2 schematically represents an example of a hardware system which can be used to implement a computing device in use for an automated taxi system of the aircraft;
- Fig. 3 schematically represents functional blocks of the automated taxi system of the aircraft in accordance with one embodiment;
- Fig. 4 schematically represents an algorithm for implementing collision-avoidance by the automated taxi system of the aircraft in accordance with one embodiment; and
- Fig. 5 illustrates an example taxiing scenario in accordance with one embodiment.

### DETAILED DESCRIPTION OF AT LEAST ONE EMBODIMENT

The present subject-matter provides systems and methods which provide automated taxi functionality for a taxi phase during which an aircraft travels within an airport environment to reach a destination, for example to reach a designated runway to carry out the take-off or to reach an airport's gate.

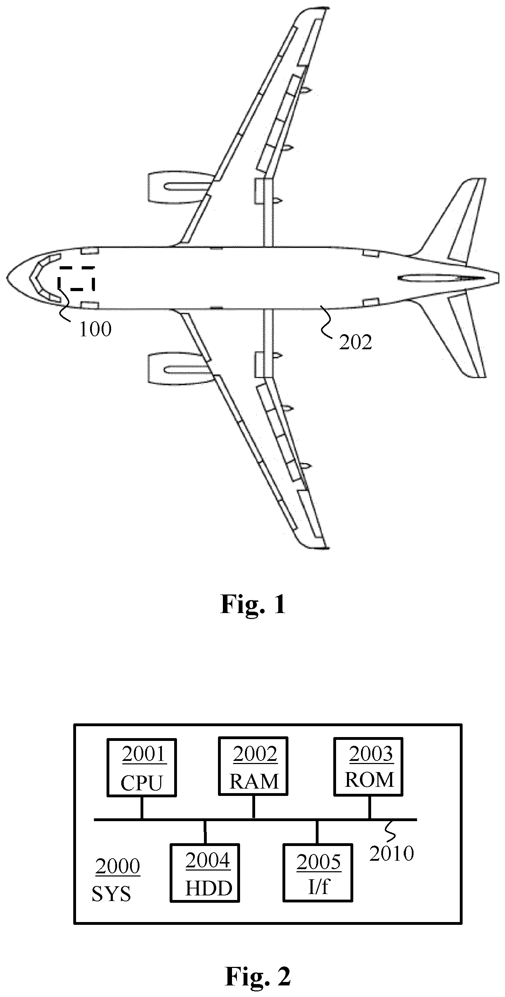

**Fig. 1** schematically represents a top view of an aircraft 202. The aircraft 202 comprises avionics equipment, which provides computing ability to the aircraft 202. The aircraft 202 comprises human-machine interface enabling devices in the cockpit in conjunction with the avionics equipment, such as displays or touch screens or EFB (Electronic Flight Bag) device, thus enabling interactions with the pilots of the aircraft 202.

The aircraft's avionics equipment includes a position-awareness equipment enabling the avionics to know in real-time the geographical position of the aircraft 202, such as a GNSS (Global Navigation Satellite System) receiver, for example a GPS (Global Positioning System) receiver, a GLONASS receiver, a Galileo receiver...

The aircraft's avionics equipment preferably further includes at least one communication interface configured to enable communications through a network with Air Traffic Control (ATC) equipment of the airport's control tower and further preferably with Operations Control Center (OCC) equipment of an airline with which the aircraft 202 is associated. For example, in some embodiments, the network is a mobile communications network such as 3G, long term evolution (LTE), 4G, 5G, 6G, or any other suitable mobile communications network. The network can further include a satellite-based communications network or a wired network for when the aircraft 202 is on the ground at an airport's gate, and preparing for takeoff (boarding, refueling...). In some embodiments, the network includes a wireless fidelity (Wi-Fi) network or Wireless Local Area Network (WLAN), for example, when the aircraft 202 is on the ground and is in close proximity to a Wireless Access Points (WAP).

The aircraft 202 embeds an automated aircraft taxi system 100, for example as part of the aircraft's avionics equipment, which is configured to implement, potentially among other functions, a collision-avoidance function, as disclosed hereafter.

**Fig. 2** schematically represents an example of a hardware system SYS 2000 which can be used to implement a computing device in use for the automated taxi system 100. The hardware system SYS 2000 can be used as well to implement other aircraft's avionics functionalities.

According to the shown example, the hardware system SYS 2000 comprises at least the following components interconnected by a communication bus 2010: a processor, microprocessor, microcontroller or CPU (Central Processing Unit) 2001; a RAM (Random-Access Memory) 2002; a ROM (Read-Only Memory) 2003 or an EEPROM (Electrically-Erasable Programmable ROM) such as a Flash memory; an HDD (Hard-Disk Drive) 2004 or an SD (Secure Digital) card reader, or any other device adapted to read information stored on non-transitory information storage medium; and at least one interface I/f 2005 including preferably a communication interface to enable communicating with other equipment such as ATC equipment or OCC equipment.

The CPU 2001 is capable of executing instructions loaded into the RAM 2002 from the ROM 2003 or from an external memory, such as an SD card. After the hardware system SYS 2000 has been powered on, the CPU 2001 is capable of reading instructions from the RAM 2002 and executing these instructions. The instructions form one or more computer program products that cause the CPU 2001 to perform some or all of the actions disclosed herein.

The subject matter disclosed herein can be implemented in or with software in combination with hardware and/or firmware. For example, the subject matter described herein can be implemented in software by execution of a set of instructions or program by a processor or processing unit or a programmable computing machine, such as a DSP (Digital Signal Processor). The subject matter disclosed herein can be implemented in hardware form by a machine or a dedicated chip or chipset, such as an FPGA (Field-Programmable Gate Array) or an ASIC (Application-Specific Integrated Circuit). In general, the automated taxi system 100 comprises processing electronics circuitry adapted and configured for implementing the subject matter disclosed herein.

Some embodiments of the disclosed system may be implemented, for example, using a storage medium, a computer-readable medium or an article of manufacture which may store an instruction or a set of instructions that, when executed by a machine (e.g., processor, processing circuit, or microcontroller), may cause the machine to perform a method and/or operations in accordance with embodiments of the disclosure. In addition, a server or database server may include machine readable media configured to store machine executable program instructions. Such a machine may include, for example, any suitable processing platform, computing platform, computing device, processing device, computing system, processing system, computer, processor, or the like, and may be implemented using any suitable combination of hardware, software, firmware, or a combination thereof and utilized in systems, subsystems, components, or sub-components thereof. The computer-readable medium or article may include, for example, any suitable type of memory unit, memory device, memory article, memory medium, storage device, storage article, storage medium and/or storage unit, for example, memory (including non-transitory memory), removable or non-removable media, erasable or non-erasable media, writeable or re-writeable media, digital or analog media, hard disk, floppy disk, Compact Disk Read Only Memory (CD-ROM), Compact Disk Recordable (CD-R), Compact Disk Rewriteable (CD-RW), optical disk, magnetic media, magneto-optical media, removable memory cards or disks, various types of Digital Versatile Disk (DVD), a tape, a cassette, or the like. The instructions may include any suitable type of code, such as source code, compiled code, interpreted code, executable code, static code, dynamic code, encrypted code, and the like, implemented using any suitable high-level, low-level, object-oriented, visual, compiled and/or interpreted programming language.

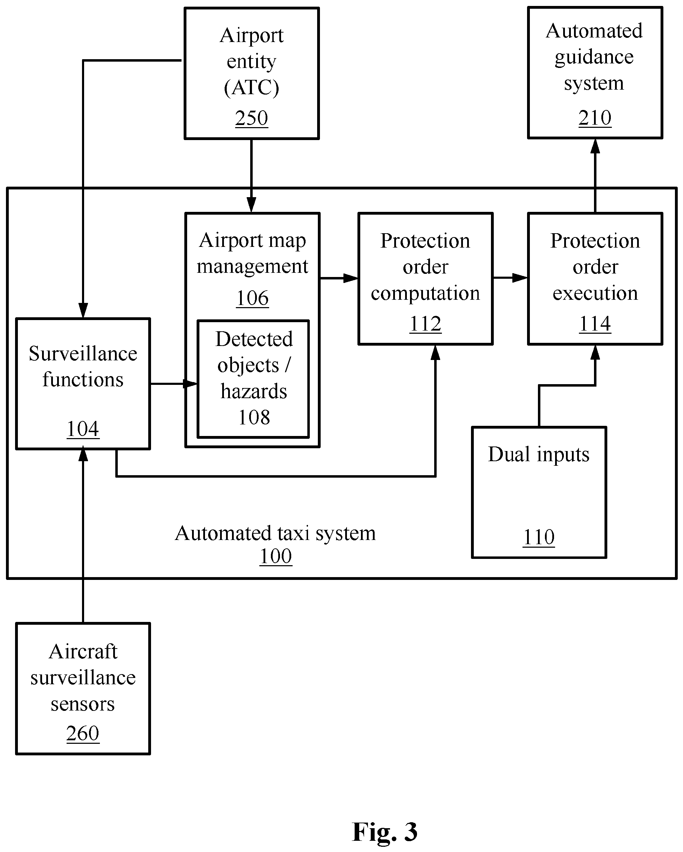

**Fig. 3** schematically represents functional blocks of the automated taxi system 100 in accordance with one embodiment.

More specifically, the automated taxi system 100 implements a protection function for helping the aircraft 202 to avoid a collision with an object or hazard on the taxiway while taxiing to the destination.

The one or more objects or hazards can include any physical hazard on the taxiway (e.g., cracks, potholes, sink hole, severe damage, etc.) or another moving or stationary object (*e.g.*, another taxiing aircraft, parked aircraft, vehicle, tram, bus, car, mobile stairway, etc.).

The protection function includes surveillance functions 104 configured to obtain surveillance information about objects or hazards present within the airport environment. In some embodiments, the surveillance information comes from one or more aircraft surveillance sensors 260. For example, the information is video images captured by one or more cameras arranged on the aircraft 202 so as to capture surveillance data on the airport environment exterior to the aircraft 202. In some embodiments, the one or more aircraft surveillance sensors 260 include one or more of: one or more cameras, a lidar device, a radar device, a microwave sensor, or an infrared sensor.

The surveillance functions 104 is configured to analyze the surveillance information obtained so as to detect objects or hazards on taxiways within the airport environment. In some embodiments, the surveillance functions 104 is configured to determine that a hazard or object is present based on received surveillance data (typically from the aircraft surveillance sensors 260), including radar signatures, lidar signatures, photographs, images, video, or other signatures indicating a solid object moving or stationary on the taxiway. The processing circuit 206 can use any suitable algorithm to detect presence of an object or hazard on the taxiway.

Any detected object/hazard 108 is then provided to an airport map management function 106 configured to display or provide to the aircraft's pilots an airport map on which the location of each detected object or hazard 108 is indicated. In some cases, the airport map thus updated can be saved and shared with a network of computers such that one or more other aircrafts, or airport entity, have access to the airport map with hazards and objects indicated thereon.

The airport map represents at least part of the airport environment and displays the actual position in real-time of the aircraft 202 relative to runways and taxiways of the airport environment. Moreover, the airport map displays the actual position in real-time of each detected object or hazard 108 in the displayed representation of the airport environment or of part thereof.

In some embodiments, the airport map can be provided by an equipment of an airport entity 250, such as ATC (Air Traffic Control) equipment or OCC (Operations Control Center) equipment.

In some embodiments, the airport map management function 106 can indicate the location of the objects or hazards on the airport map by first determining the actual location of the aircraft 202 on the map and its direction, and then, based on measurements from the surveillance functions 104, the airport map management function 106 can determine a distance and direction of the hazards and objects from the current location of the aircraft 202. Once these determinations are made, the airport map management function 106 can determine on the airport map where the hazards and objects should be indicated based on the distance and direction of an identified hazard or object with respect to the current location of the aircraft 202.

In some embodiments, the airport map can include locations of objects and hazards already known within the airport environment in order to ease object or hazard identification and detection within the airport environment.

In some embodiments, ATC equipment can provide information about taxi clearances to the surveillance functions 104 and/or OCC equipment map can provide information about flight dispatch to the surveillance functions 104 in order to ease object identification and detection within the airport environment.

The automated taxi system 100 is configured to obtain a guidance path to be followed on taxiways by the aircraft 202 to the destination of the taxi phase within the airport environment. The guidance path can be provided by an equipment of an airport entity 250, such as ATC (Air Traffic Control) equipment or OCC (Operations Control Center) equipment. The guidance path can be computed, in a variant, by the automated taxi system 100 (*e.g.*, by the airport map management function 106), as many conventional navigation systems do.

The automated taxi system 100 further includes a protection order computation function 112. The protection order computation function 102 is configured to calculate or predict a trajectory of each object or hazard 108 detected on taxiways of the airport environment. Some objects or hazards 108 may be detected as stationary (same location at successive time samples) or other objects may be detected as moving (different locations at successive time samples). The protection order computation function 102 is configured to predict the trajectory of moving objects taking into account at least of an actual location of the moving objects in question, a direction of movement of the moving objects in question, as well as a layout of the taxiways on the airport map. Indeed, the moving objects detected on the taxiways are expected to follow the track of the taxiways.

As an example, if, as the surveillance functions 104 monitor a specific object, the specific object is approaching the aircraft 202 faster than the speed of the aircraft 202, the specific object is likely moving. If, however, the surveillance functions 104 detect that the specific object (or hazard in this case) is moving toward the aircraft 202 at the same speed as the aircraft 202 and as the aircraft 202 travels in the direction of the specific object, the specific object is likely a stationary one. One having ordinary skill in the art will appreciate that any suitable motion detection and objection trajectory algorithms can be utilized to determine location and trajectory of objects. The trajectory of the objects is determined with respect to the trajectory and location of the aircraft 202 such that the automated taxi system 100 determines whether the aircraft 202 is likely to collide with the objects (or hazards) in question.

Predicting the trajectory of objects can be constrained somewhat by the object's position on the airport map. For example, the object's location is provided on the airport map and the trajectory is predicted based on the layout of various taxiway segments and borderlines on the airport map. It is likely that the object will follow the taxiway segments (or services roads), and therefore, the protection order computation function 112 is configured to make the prediction of the trajectory of the object with the position of the object and its relation to the layout of the taxiways (or service roads) as a consideration.

The protection order computation function 102 is configured to compute a protection order from the predicted trajectory. The computation of the protection order involves computing a trajectory of the taxiing aircraft 202 to prevent a collision of the taxiing aircraft with the detected object or hazard 108 in question. For each stationary object or hazard, the computation of the protection order involves computing a trajectory of the taxiing aircraft 202 which excludes the location of each stationary object or hazard (typically find a bypass trajectory). For each stationary object or hazard, the computation of the protection order involves checking whether the predicted trajectory of the moving object intersects with the trajectory of the aircraft 202. When the predicted trajectory of the moving object does not intersect with the trajectory of the aircraft 202, the protection order computation function 102 is configured to disregard the moving object in question.

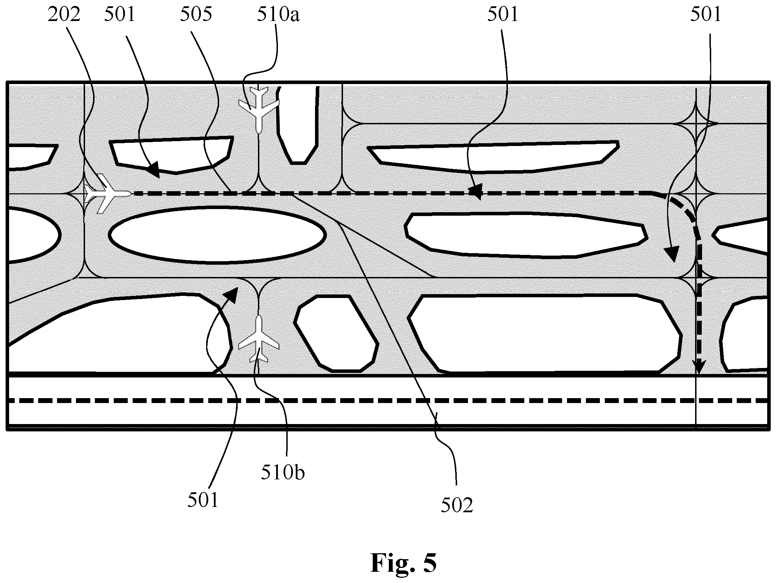

Execution of the protection order is then managed by a protection order execution function 114 that is configured to instruct an automated guidance system 210 of the aircraft 202. The protection order execution function 114 implements a collision-avoidance function that triggers automatic braking of the aircraft and/or alert the pilots when approaching an obstacle such as an object. By taking into account the layout of the taxiways on the airport map for predicting the trajectory of moving objects within the airport environment, spurious triggering of alerts to the pilots and/or uncomfortable actions, such as unnecessary auto-braking, are avoided. A collision-avoidance scenario is presented hereafter with respect to Fig. 5.

However, before or during execution of the protection order 114, the pilot(s) of the aircraft 202 may disagree with the protection order or may want to manually override the protection order to prevent another possible issue. In this case, the protection function 102 includes a dual input 110 to override the protection order sent to the automated guidance system 210 of the aircraft 202, i.e., to override guidance instructions.

More specifically, the automated taxi system 100 preferably includes dual inputs function 110 that requires two inputs to override the protection order. In order to avoid human errors when overriding the protection order, the two inputs can be provided
- either by both pilots of the aircraft 202,
- or by one pilot and an ATC controller,
- or by one pilot and an OCC dispatcher.

To do so, the automated taxi system 100 provides a human-machine interface including an action interface that can be displayed and with which the pilots can interact (the action interface and items thereon are selectable by human operation via the human-machine interface). The action interface has the ability to receive instructions from the pilots to request that the protection order be overridden. Moreover, the automated taxi system 100 can have the ability to receive digital messages from ATC equipment and/or OCC equipment which provide instructions or confirmation that the protection order can be overridden.

If the aforementioned dual inputs are entered, execution of the protection order (or guidance instructions) ends or does not occur, *e.g*., depending on when the dual inputs are received.

The execution of the protection order 114 is active during a taxi phase of an aircraft, aiming at protecting the aircraft 202 against a collision with objects or hazards during the taxi phase to the destination within the airport environment.

In some embodiments, the automated taxi system 100 can be configured to prevent from taxiway excursions, by using an anti-excursion function.

In some embodiments, the automated taxi system 100 can be configured to prevent from runway incursions while no clearance has been provided from ATC, by using an anti-incursion function.

In some embodiments, as the aircraft 202 is moving along the guidance path during the taxi phase, the border lines of the taxiway ahead of the aircraft 202 can be detected by the surveillance functions 104, and the associated aircraft surveillance sensors 260, to get the required accuracy in the automated guidance of the aircraft 202. The surveillance functions 104 can thus be configured to provide indication of effective location of said border lines with respect to the aircraft 202 to the protection order computation function 112 (or to the protection order execution function 114) so as to adjust instructions to the automated guidance system 210 to protect the aircraft 202 from taxiway excursions.

Moreover, the surveillance functions 104 may use the airport map and the actual location of the aircraft within the airport environment to correlate the taxiways border lines deduced or depicted on the airport map with the border lines of the taxiway ahead of the aircraft 202 as captured by the aircraft sensors 260. As the captured border lines can be correlated with the taxiway border position on the airport map, the prediction of the taxiway border lines position in the future as the aircraft 202 is moving can be computed. This prediction can be used:
- either for reducing a field of view of the aircraft surveillance sensors 260 capturing the taxiway border lines (as anticipation is done thanks to the airport map),
- or the anticipation itself can be better computed, predicting, for example, a next sharp turn.

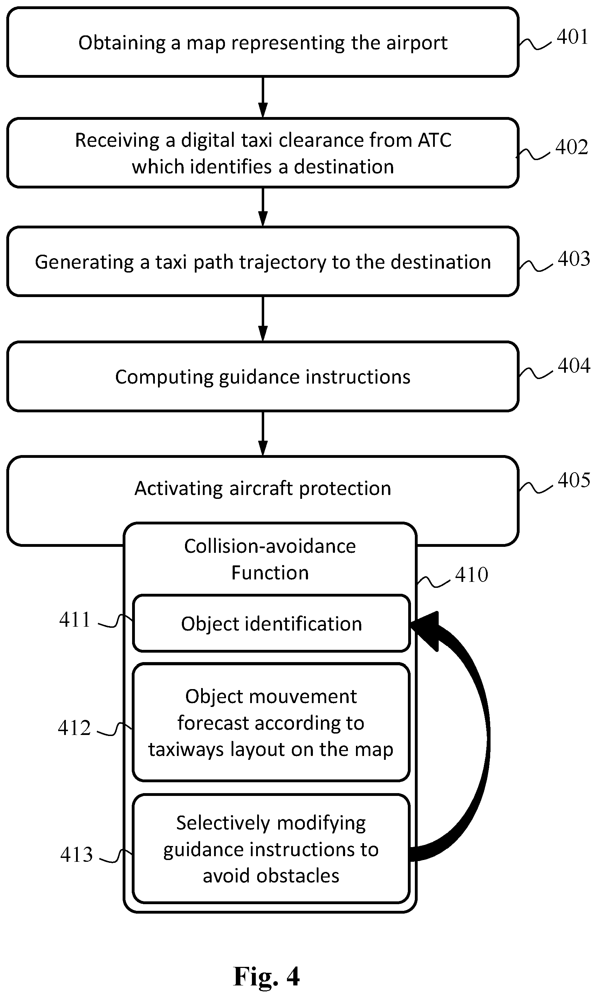

**Fig. 4** schematically represents an algorithm for implementing collision-avoidance by the automated taxi system 100 in accordance with one embodiment.

In a step 401, the automated aircraft taxi system 100 obtains an airport map representing the airport environment. The airport map may identify locations of objects or hazards already known within the airport environment.

In a step 402, the automated aircraft taxi system 100 obtains a digital taxi clearance from the ATC equipment 10, the digital taxi clearance identifying a destination within the airport environment to which the aircraft 202 is instructed to taxi.

In a step 403, the automated aircraft taxi system 100 generates a taxi path trajectory (guidance path) of the aircraft 202 to the destination on the airport map, for example as many conventional navigation systems do. The generated taxi path trajectory avoids collision of the aircraft 202 with objects or hazards already present on the airport map.

In a step 404, the automated aircraft taxi system 100 computes guidance instructions based on the taxi path trajectory, so that the guidance instructions enable automatically guiding the aircraft 202 within the airport environment according to the taxi path trajectory until reaching the destination.

In a step 405, the automated aircraft taxi system 100 activates aircraft protection. Then, in a step 410, the automated aircraft taxi system 100 activates a collision-avoidance function. Other aircraft protection functions may also be activated, such as anti-excursion function to prevent the aircraft 202 from crossing taxiway borders and/or anti-incursion function to prevent the aircraft 202 from entering a runway while no clearance from ATC has been received beforehand.

Within the collision-avoidance function, in a step 411, objects are identified. In some embodiments, surveillance data from the aircraft surveillance sensors 260 are used to do so. In response to determining that the object or hazard is present on the taxiway, the automated aircraft taxi system 100 indicates the location of the object or hazard on the airport map, saves the airport map in memory, and updates the airport map in real-time to show actual position of the aircraft 202 and of identified objects and hazards. The automated aircraft taxi system 100 can display in real-time the airport map for the pilot(s) of the aircraft 202 to view the information contained in the airport map thus updated.

In a step 412, the automated aircraft taxi system 100 forecasts (or predicts) objects movement (or trajectory) within the airport environment by using the layout of taxiways in the airport map, as disclosed above. The automated aircraft taxi system 100 determines whether or not the predicted trajectory of the object in question intersects with or is likely to intersect with the taxi path trajectory of the aircraft 202.

In a step 413, the automated aircraft taxi system 100 selectively modifies the guidance instructions to avoid the identified objects according to whether or not, in the case of moving objects, the predicted trajectory of the identified objects intersects with the taxi path trajectory of the aircraft 202. The guidance instructions can be modified so as to apply a revised taxi path trajectory of the aircraft 202 to the destination. As detailed hereafter, the automated aircraft taxi system 100 may disregard some objects in the collision-avoidance function, depending on the trajectory of the object with respect to the layout of taxiways (or service roads) on the airport map and on the current taxi path trajectory of the aircraft 202. Thus, spurious triggering of alerts to the pilot(s) and/or uncomfortable actions (e.g., unexpected turn or auto-brake) are avoided.

Thus, in some embodiments, the method performed by the automated aircraft taxi system 100 includes calculating, based on the location and trajectory of an identified object or hazard and the location and trajectory of the aircraft 202, new guidance instructions for the aircraft 202 including a revised trajectory to avoid the object or hazard. The guidance instructions are thus modified to thereby alter the taxi path trajectory of the aircraft 202 to the revised trajectory.

When the taxi path trajectory of the aircraft 202 cannot be modified to avoid that the taxi path trajectory of the aircraft 202 passes through a detected object or hazard, which means that no alternative taxi path trajectory can be found, the collision-avoidance function 410 shall anyway trigger revision of the guidance instructions to avoid collision (typically engage auto-braking of the aircraft 202 so as to stop the aircraft 202) and/or alert the pilots of the aircraft.

The modified guidance instructions can thus include, for example, changing the direction of the trajectory of the aircraft 202 to get around the identified objects, turning to avoid the object's trajectory or position, slowing the aircraft 202 down to avoid a passing object by activating auto-braking function of the aircraft 202, or any other suitable maneuver to ensure that the aircraft 202 does not collide with the object or hazard.

The guidance instructions are thus recursively modified in real-time according to the update of objects identification and of the prediction of their trajectory according to the layout of the taxiways on the airport map, as well as to the potential revisions of the taxi path trajectory of the aircraft 202.

**Fig. 5** illustrates an example taxiing scenario in accordance with one embodiment.

Fig. 5 shows an airport map, on which the actual position of the aircraft 202 is represented. The aircraft 202 is moving on taxiways 501 within the airport environment represented by the airport map. The aircraft 202 follows a taxi path trajectory 505 to reach an entry point of a runway 502.

On the airport map, two objects 510a and 510b identified on the taxiways 501 are represented. The automated aircraft taxi system 100 determines whether the identified objects 510a and 510b are moving or stationary.

If the identified objects 510a and 510b are stationary, the automated aircraft taxi system 100 detects that the taxi path trajectory 505 is not likely to collide with the identified objects 510a and 510b, and thus no modification of the guidance instructions is required.

If any one or both of the identified objects 510a and 510b are moving, the automated aircraft taxi system 100 predicts their trajectory taking into account the location of the identified objects 510a and 510b and the layout of the taxiways on the airport map.

In the example scenario of Fig. 5, the automated aircraft taxi system 100 has to watch out for the moving object 510a since its predicted trajectory intersects with the taxi path trajectory 505 of the aircraft 202 in view of the layout of the taxiways on the airport map. Guidance instructions may have to be revised to avoid collision with the moving object 510a. In this case, the automated aircraft taxi system 100 can engage auto-braking function of the aircraft 202 and/or alerts the pilot(s) of the aircraft 202.

In the example scenario of Fig. 5, the automated aircraft taxi system 100 can disregard the moving object 510b since its predicted trajectory does not intersect with the taxi path trajectory 505 of the aircraft 202 in view of the layout of the taxiways on the airport map.

If the automated aircraft taxi system 100 did not take the airport map, including the layout of the taxiways 501 into account when predicting the trajectory of the moving object 510b, the automated aircraft taxi system 100 might (erroneously) predict that a collision will likely occur between the taxiing aircraft 202 and the moving object 510b (e.g., depending on their respective speed). However, because the automated aircraft taxi system 100 takes into account the above considerations, including the layout of the taxiways 501, the automated aircraft taxi system 100 can determine or predict that the moving object 510b will turn either left or right in its path. The taxiing aircraft 202 can then be directed by the guidance instructions to proceed along its current taxi path trajectory. Thus, spurious triggering of alerts to the pilot(s) and/or uncomfortable actions (e.g., unexpected turn or auto-brake) are avoided.

The disclosure above relating to the prediction of trajectory of moving objects on taxiways of the airport environment can be applied similarly to moving objects (such as trams, buses, cars, etc.) of service roads of the airport environment. Distinction between object types can for example be done thanks to specific signatures of said objects in the surveillance data (*e.g.*, through image recognition). Such distinction can better predict the trajectory of these objects and better predict a potential risk of collision because the automated aircraft taxi system 100 can eliminate possible routes of the objects (*e.g*., eliminate routes that involve the objects moving off taxiways and service roads).

As used herein, an element or operation recited in the singular and proceeded with the word "a" or "an" should be understood as not excluding plural elements or operations, unless such exclusion is explicitly recited. Furthermore, references to "one embodiment" of the present disclosure are not intended to be interpreted as excluding the existence of additional embodiments that also incorporate the recited features.

## Claims

1. A method performed by an automated aircraft taxi system (100) for an aircraft (202) taxiing within an airport environment, which comprises:
- obtaining (401) an airport map and representing in real-time a current location of the aircraft (202) on the airport map;
- obtaining a taxi path trajectory (505) of the aircraft (202) to a destination within the airport environment;
- computing (404) guidance instructions based on the taxi path trajectory (505), so that the guidance instructions enable automatically guiding the aircraft (202) within the airport environment according to the taxi path trajectory (505) until reaching the destination; and
- activating (405) an aircraft protection including a collision-avoidance function (410) that triggers revision of the guidance instructions and/or alerts the pilots of the aircraft when the predicted trajectory of moving objects intersects the taxi path trajectory (505);
wherein the method further comprises:
- detecting moving objects within the airport environment; and
- identifying a location of the moving objects on the airport map;
and wherein the collision-avoidance function (410) disregards an identified object that is moving on a taxiway in the airport environment when a predicted trajectory of the identified object does not intersect the taxi path trajectory (505) according to the location of the identified object and the layout of taxiways on the airport map.

2. The method according to claim 1, wherein the collision-avoidance function (410) further triggers revision of the guidance instructions when the taxi path trajectory (505) passes through a detected object or hazard, which includes calculating, based on the location and trajectory of the object or hazard and the current location and the taxi path trajectory (505), a revised taxi path trajectory to avoid the detected object or hazard;
and wherein the method further includes modifying the guidance instructions to thereby alter the taxi path trajectory (505) to the revised taxi path trajectory.

3. The method according to claim 1 or 2, wherein the airport map identifies locations of objects or hazards already known within the airport environment, and the generated taxi path trajectory (505) avoids collision of the aircraft (202) with the objects or hazards already present on the airport map when obtained by the automated aircraft taxi system (100).

4. The method according to any one of claims 1 to 3, wherein the airport map is provided by an equipment of an airport entity (250), such as Air Traffic Control equipment or Operations Control Center equipment.

5. The method according to claim 4, wherein the Air Traffic Control equipment provides information about taxi clearances and/or the OCC equipment map provides information about flight dispatch to ease object detection within the airport environment.

6. The method according to any one of claims 1 to 5, wherein the automated aircraft taxi system (100) detects hazards and objects within the airport environment by:
- determining the current location of the aircraft (202) on the airport map and its direction,
- based on measurements from surveillance data provided by surveillance aircraft sensors (260), determining distance and direction of the hazards and objects from the current location of the aircraft (202);
and wherein the method further comprises:
- determining on the airport map where the hazards and objects should be indicated based on the distance and direction of said hazards and objects with respect to the current location of the aircraft (202).

7. The method according to any one of claims 1 to 6, wherein the method further comprises:
- detecting border lines of the taxiway ahead of the aircraft (202) using aircraft surveillance sensors (260); and
- adjusting the guidance instructions to protect the aircraft (202) from taxiway excursions:

8. The method according to claim 7, wherein the method further comprises:
- correlating taxiways border lines on the airport map with border lines of the taxiway ahead of the aircraft (202) as captured by the aircraft surveillance sensors (260);
- . making prediction of the taxiway border lines position in the future as the aircraft (202) is moving; and
- reducing a field of view of the aircraft surveillance sensors (260) capturing the taxiway border lines ahead of the aircraft (202) according to the prediction.

9. The method according to any one of claims 1 to 8, wherein the method further comprises receiving dual inputs (110) to override the guidance instructions,
either by both pilots of the aircraft (202),
or by one pilot and an ATC controller,
or by one pilot and an OCC dispatcher,
wherein the automated taxi system (100) provides a human-machine interface including an action interface with which the pilots can interact and which has ability to receive instructions from the pilots of the aircraft (202) to request that the protection order be overridden, and wherein the automated taxi system (100) has the ability to receive digital messages from Air Traffic Control equipment and/or Operations Control Center equipment which provide confirmation that the guidance instructions can be overridden.

10. A computer program product comprising executable instructions, which when executed by a processing circuit of a computing device causes the computing device to execute the method according to any one of claims 1 to 8.

11. A non-transitory computer-readable storage medium having executable instructions stored thereon, which when read from the non-transitory computer-readable storage medium and executed by a processing circuit of a computing device causes the computing device to execute the method according to any one of claims 1 to 8.

12. An automated aircraft taxi system (100) for an aircraft (202) taxiing within an airport environment, which comprises electronic circuitry configured to implement:
- obtaining (401) an airport map and representing in real-time a current location of the aircraft (202) on the airport map;
- obtaining a taxi path trajectory of the aircraft (202) to a destination within the airport environment;
- computing (404) guidance instructions based on the taxi path trajectory (505), so that the guidance instructions enable automatically guiding the aircraft (202) within the airport environment according to the taxi path trajectory (505) until reaching the destination; and
- activating (405) an aircraft protection including a collision-avoidance function (410) that triggers revision of the guidance instructions and/or alerts the pilots of the aircraft (202) when the predicted trajectory of moving objects intersects the taxi path trajectory (505); wherein the electronic circuitry is configured to further implement:
- detecting moving objects within the airport environment; and
- identifying a location of the moving objects on the airport map;
and wherein the electronic circuitry is further configured such that the collision-avoidance function (410) disregards an identified object that is moving on a taxiway in the airport environment when a predicted trajectory of the identified object does not intersect the taxi path trajectory (505) according to the location of the identified object and the layout of taxiways on the airport map.

13. An aircraft (202) including the automated aircraft taxi system (100) according to claim 12.
